# EUROPÄISCHE PATENTSCHRIFT

(11) **EP 3 749 874 B1**
(45) Veröffentlichungstag und Bekanntmachung des Hinweises auf die Patenterteilung: **07.06.2023**
(21) Anmeldenummer: 19701766.8
(22) Anmeldetag: 23.01.2019
(51) Int. Cl.: F16D 1/08

(54) **VERFAHREN ZUM KLEMMVERBINDEN EINES HOHLWELLENBEREICHS MIT EINER WELLE MITTELS EINES KLEMMRINGS UND ANORDNUNG ZUR DURCHFÜHRUNG DES VERFAHRENS**
METHOD FOR THE CLAMPING CONNECTION OF A HOLLOW SHAFT REGION TO A SHAFT BY MEANS OF A CLAMPING RING, AND ARRANGEMENT FOR CARRYING OUT THE METHOD
PROCÉDÉ DE FIXATION PAR SERRAGE D'UNE ZONE D'ARBRE CREUX AVEC UN ARBRE AU MOYEN D'UNE BAGUE DE SERRAGE ET DISPOSITIF POUR RÉALISER CE PROCÉDÉ

(30) Priorität: 09.02.2018 DE 102018001080
(43) Veröffentlichungstag der Anmeldung: 16.12.2020
(73) Patentinhaber: SEW-EURODRIVE GmbH & Co. KG, 76646 Bruchsal (DE)
(72) Erfinder: WÖPPERMANN, Markus, 76307 Karlsbad (DE); HALLER, Sascha, 76135 Karlsruhe (DE)
(86) Internationale Anmeldenummer: PCT/EP2019/025024
(87) Internationale Veröffentlichungsnummer: WO 2019/154562

(56) Entgegenhaltungen:
- DE-A1-102011 013 887
- US-A- 2 395 169
- US-A- 4 830 297

## Beschreibung

Die Erfindung betrifft ein Verfahren zum Klemmverbinden eines Hohlwellenbereichs mit einer Welle mittels eines Klemmrings und eine Anordnung zur Durchführung des Verfahrens.

Aus der DE 101 55 581 A1 ist eine radiale Klemmnabe bekannt. Dabei wird der Klemmring im entspannten Zustand montiert und dann durch Betätigen der Schraube weiter aufgeschrumpft.

**Aus der** DE 10 2011 013 887 A1 **ist als nächstliegender Stand der Technik eine Klemmkupplung zur drehfesten Verbindung zweier drehender Teile, vorzugsweise Welle und Nabe, bekannt.**

**Aus der** US 2 395 169 A **ist eine Klemmverbindung bekannt.**

**Aus der** US 4 830 297 A **ist ein Klemmring zur kraftschlüssigen Verbindung einer Spindelachse bekannt.**

Der Erfindung liegt daher die Aufgabe zugrunde, eine Klemmverbindung weiterzubilden.

Erfindungsgemäß wird die Aufgabe bei dem Verfahren nach den in Anspruch 8 und bei der Anordnung nach den in Anspruch 1 angegebenen Merkmalen gelöst.

Wichtige Merkmale bei der Anordnung sind, dass es zum Klemmverbinden eines Hohlwellenbereichs, insbesondere Adapterwelle, mit einer Welle vorgesehen ist,
wobei die Welle in den Hohlwellenbereich eingeführt ist, auf welchen der Klemmring aufgesteckt ist,
wobei der Klemmring einen radial und axial durchgehenden Schlitz aufweist,
wobei eine tangential gerichtete Stufenbohrung im Klemmring angeordnet ist, welche eine Schraube aufnimmt,
wobei die Schraube in einen Gewindebereich der Stufenbohrung eingeschraubt ist, welche auf der von der Stufe der Stufenbohrung abgewandten Seite des Schlitzes angeordnet ist,
wobei die Schraube, insbesondere der Schraubenkopf begrenzt ist durch ein mit dem Klemmring verbundenes, insbesondere mit dem Klemmring einstückig, also einteilig, ausgeführten, Begrenzungsmittel,
welches als Verformungsbereiche des Randes der die Schraube aufnehmenden Stufenbohrung ausgeführt und auf der von der Stufe abgewandten Seite des Schraubenkopfes angeordnet sind.

Von Vorteil ist dabei, dass einfache kostengünstige Bauteile verwendbar sind.

Von Vorteil ist dabei, dass das Begrenzungsmittel sehr nah an der Schraube anordenbar ist, so dass große Kräfte beim Abstützen, insbesondere beim berührenden Begrenzen der Schraube, in das Begrenzungsmittel einleitbar sind und über den Klemmring ableitbar sind.

**Der für das Einschrauben der Schraube in der Stufenbohrung ausgeführte Gewindebereich ist also auf der von den Verformungsbereichen abgewandten Seite des Schlitzes des Klemmrings angeordnet.**

Bei einer vorteilhaften Ausgestaltung weist der Hohlwellenbereich eine Vertiefung, insbesondere eine radial gerichtete Vertiefung, auf, in welchen ein Gewindestift, insbesondere ein Gewindestift aus Stahl, zumindest teilweise hineinragt,
welcher in eine radial gerichtete Gewindebohrung des Klemmrings eingeschraubt ist. Von Vorteil ist dabei, dass eine relative Ausrichtung eines Schlitzes des Hohlwellenbereichs zum Schlitz des Klemmrings erreichbar ist.

Bei einer vorteilhaften Ausgestaltung weist der Hohlwellenbereich zumindest einen radial durchgehenden, sich axial, also parallel zur Drehachse der Welle und des Hohlwellenbereichs, erstreckenden Schlitz auf. Von Vorteil ist dabei, dass eine größere Elastizität des Hohlwellenbereichs erreichbar ist.

Erfindungsgemäß sind die Stufenbohrung und die Schraube tangential ausgerichtet. Von Vorteil ist dabei, dass die Schraube senkrecht zur Schlitzebene des Schlitzes ausrichtbar ist, also in Normalenrichtung zur Schlitzebene.

Bei einer vorteilhaften Ausgestaltung ist zumindest der Schraubenkopf der Schraube mit einer Teflon- oder Kunststoffschicht beschichtet, wobei die Schraube selbst aus Stahl gefertigt ist. Von Vorteil ist dabei, dass das Schraubgewinde schützbar ist gegen Überlastung, da das Begrenzungsmittel zuvor verformt wird.

Bei einer vorteilhaften Ausgestaltung weist das Begrenzungsmittel, also die Verformungsbereiche, einen mittig angeordneten Freiraum auf. Von Vorteil ist dabei, dass ein Werkzeug zum Betätigen der Schraube durch den Freiraum hindurchführbar ist.

Bei einer vorteilhaften Ausgestaltung ist der Innendurchmesser, insbesondere der lichte Durchmesse, des Klemmrings im entspannten Zustand des Klemmrings betragsmäßig kleiner als der Außendurchmesser des Hohlwellenbereichs. Vorteiligerweise ist schon beim Entspannen des Klemmrings nach dem Aufschieben auf den Hohlwellenbereich eine kraftschlüssige Verbindung erreichbar.

Bei einer vorteilhaften Ausgestaltung weist der Klemmring eine Ausnehmung, insbesondere Einstich, derart auf, dass am Klemmring eine Ebene ausgebildet ist, deren Normalenrichtung parallel zur Bohrungsachse der Stufenbohrung und/oder parallel zur Schraubachsrichtung der Schraube ausgerichtet ist,
wobei die Stufenbohrung in diese Ebene eingebracht ist und der von den Verformungsbereichen in Schraubachsrichtung überdeckte Bereich den von der Ebene in Schraubachsrichtung überdeckten Punkt oder Bereich umfasst. Von Vorteil ist dabei, dass die Stufenbohrung mit hoher Präzision einbringbar ist und die Verformungsbereiche durch Verformen des Randes der Stufenbohrung in einfacher Weise ermöglicht ist.

Wichtige Merkmale der Erfindung bei dem Verfahren zum Klemmverbinden eines Hohlwellenbereichs, insbesondere Adapterwelle, mit einer Welle mittels eines Klemmrings sind, dass der Klemmring einen radial und axial durchgehenden Schlitz aufweist,
wobei die Schlitzweite des Schlitzes mittels einer Schraube einstellbar ist,
wobei die Schraube, der Bewegungsfreiheitsgrad der Schraube in Richtung der Schraubachse und/oder der beim Drehen der Schraube von der Schraube überdeckte Raumbereich, mittels eines mit dem Klemmring einstückig, also einteilig mit dem Klemmring, ausgeführten Begrenzungsmittels begrenzt ist oder wird,
wobei in einem ersten Verfahrensschritt mittels der Schraube der Klemmring derart vorgespannt wird, dass die Schlitzweite einen größeren Wert erreicht als die Schlitzweite im entspannten Zustand des Klemmrings erreicht,
wobei danach in einem zweiten Verfahrensschritt der Klemmring auf den Hohlwellenbereich aufgesteckt wird,
wobei danach in einem dritten Verfahrensschritt, insbesondere mittels Betätigens der Schraube, die Schlitzweite verringert wird, bis der Klemmring entspannt ist und/oder bis die vorgesehene kraftschlüssige Verbindung des Hohlwellenbereichs mit der Adapterwelle erreicht wird.

Von Vorteil ist dabei, dass der Arbeitsbereich des Klemmrings vergrößert ist. Denn durch die Vorspannung mittels Aufweiten des Klemmrings ist im Gegensatz zum Stand der Technik der Arbeitsbereich viel größer. Nach dem Aufstecken des Klemmrings entspannt sich dieser und drückt schon dabei den Hohlwellenbereich an die Welle. Ein geringfügiges Weiterschrauben der Schraube bewirkt schon die gewünschte Klemmkraft beziehungsweise das gewünschte Klemmmoment. Hingegen ist im Stand der Technik nur bekannt, den Klemmring im entspannten Zustand aufzuschieben und dann durch Betätigen der Schraube weiter aufzuschrumpfen.

Außerdem ist mittels des Begrenzungsmittels nicht nur die Vorspannung ermöglicht, sondern auch ein vereinfachtes Lösen der Klemmverbindung. Denn beim Lösen wird die Schraube aus dem Gewindebereich der Stufenbohrung herausgeschraubt und dabei der Schraubenkopf am Begrenzungsmittel abgestützt. Auf diese Weise wird der Klemmring aufgeweitet und ein einfaches Lösen bewirkt.

Der Hohlwellenbereich ist vorzugsweise Bereich einer Adapterwelle, welche in einem Gehäuseteil eines Adapters gelagert ist, welcher zwischen einem Elektromotor und einem Getriebe angeordnet ist. Dabei ist das Gehäuseteil mit einem Lagerflansch oder Gehäuseteil des Elektromotors und mit einem Lagerflansch oder Gehäuseteil des Getriebes verbunden, insbesondere schraubverbunden. Die Adapterwelle ist drehfest mit einem Ritzel verbundenen, welches als das eintreibende Verzahnungsteil des Getriebes fungiert. Die Welle ist vorzugsweise eine Rotorwelle des Elektromotors, welche im Gehäuse des Elektromotors drehbar gelagert ist.

Der Klemmring ist vorteiligerweise derart ausführbar, dass der lichte Durchmesser der Ringöffnung des Klemmrings im entspannten Zustand des Klemmrings kleiner ist als der Außendurchmesser des Hohlwellenbereichs.

Bei einer vorteilhaften Ausgestaltung wird nach dem zweiten und vor dem dritten Verfahrensschritt der Klemmring in Umfangsrichtung relativ zum Hohlwellenbereich ausgerichtet, insbesondere indem ein in eine Gewindebohrung des Klemmrings eingeschraubter Gewindestift derart weit geschraubt wird, dass der Gewindestift aus dem Klemmring nach radial innen in eine Vertiefung des Hohlwellenbereichs, insbesondere in eine radial gerichtete Vertiefung am Außenumfang des Hohlwellenbereichs, zumindest teilweise hineinragt,
insbesondere so, dass eine formschlüssige Sicherung des Klemmrings relativ zum Hohlwellenbereich in Umfangsrichtung erreicht ist. Von Vorteil ist dabei, dass eine Fixierung des Schlitzes des Klemmrings relativ zu einem Schlitz des Hohlwellenbereichs ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

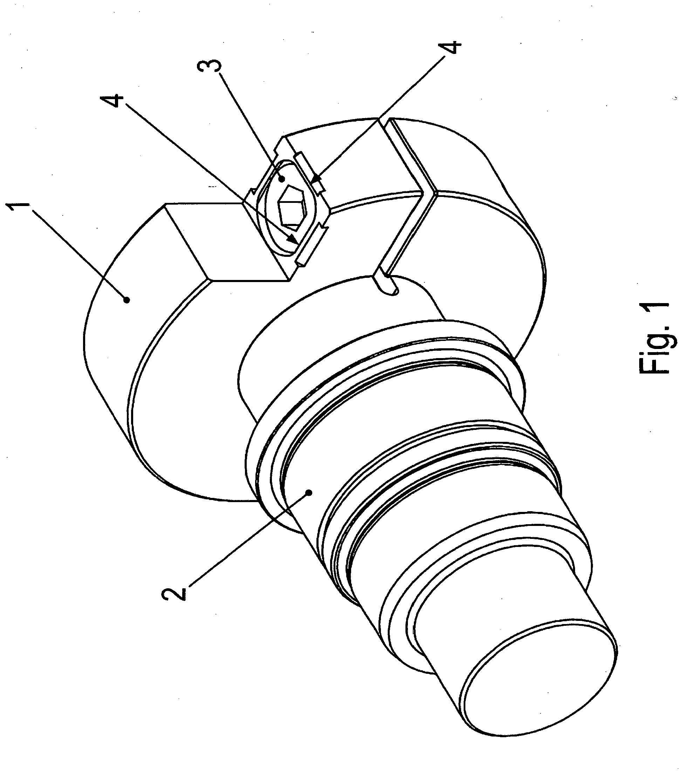

In der Figur 1 ist eine erfindungsgemäße Klemmverbindung, aufweisend einen Klemmring 1 und eine Adapterwelle 2, in Schrägansicht dargestellt.
In der Figur 2 ist ein Querschnitt durch die Klemmverbindung dargestellt.

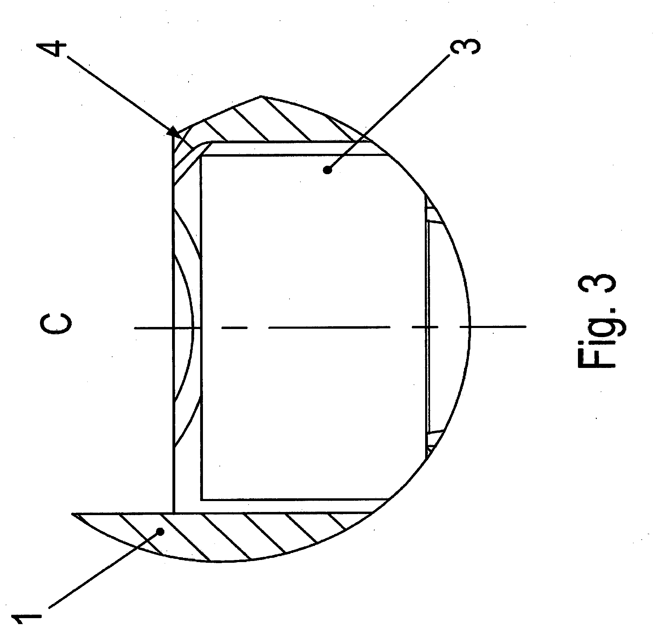

In der Figur 3 ist ein vergrößerter Ausschnitt aus Figur 2 dargestellt.

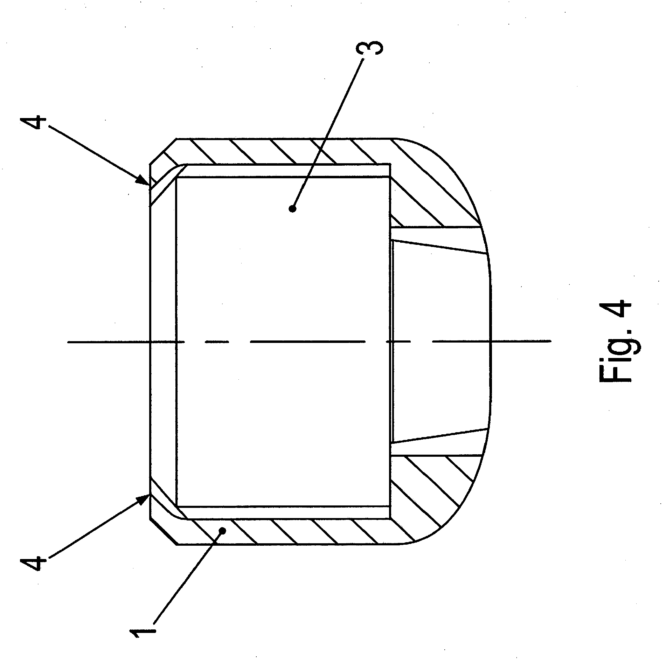

In der Figur 4 ist ein vergrößerter Ausschnitt aus einem anderen Querschnitt gezeigt, wobei als Begrenzungselement fungierende Verformungsbereiche 4 des Klemmrings 1 deutlich sichtbar sind.

Wie in den Figuren dargestellt, weist die Klemmverbindung eine Adapterwelle 2 auf, auf welche ein Klemmring 1 axial, also in Richtung der Mittelachse oder Drehachse der Adapterwelle 2, aufgeschoben ist, wobei die Adapterwelle 2 in dem von dem Klemmring 1 axial überdeckten Bereich hohl ausgeführt ist, so dass eine Welle in dem vom Klemmring 1 axial überdeckten Bereich, also in einen Hohlwellenbereich der Adapterwelle 2, in die Adapterwelle 2 eingeführt ist.

Durch Zusammenschrumpfen des Klemmrings 1 sind Adapterwelle 2 und Welle kraftschlüssig verbunden.

Der Klemmring 1 weist an einer Umfangsposition einen radial und axial durchgehenden Schlitz auf. In tangentialer Richtung, insbesondere senkrecht zur Schlitzebene, also in Normalenrichtung zur Schlitzebene, ist eine Stufenbohrung in den Klemmring 1 eingebracht, wobei auf der von der Stufe der Stufenbohrung abgewandten Seite des Schlitzes die Stufenbohrung einen Gewindebereich aufweist.

Der Gewindebereich ist dabei im engeren Bereich der Stufenbohrung angeordnet, also auf der von der Stufe der Stufenbohrung abgewandten Seite des Schlitzes.

Eine Schraube 3 ist in den Gewindebereich eingeschraubt. Der Schraubenkopf der Schraube 3 liegt an der Stufe der Stufenbohrung an, wenn die Schraube 3 in den Gewindebereich zunehmend eingeschraubt wird, wobei die Schlitzweite abnimmt. Bei diesem Abnehmen der Schlitzweite wird die Adapterwelle 2, insbesondere der hohle Bereich der Adapterwelle 2, auf die Welle zunehmend aufgeschrumpft.

Als Begrenzungsmittel zur Begrenzung der Schraube 3 ist der Mündungsrand der Stufenbohrung mit einem Werkzeug verformt. Die so entstandenen Verformungsbereiche 4 wirken als Begrenzungsmittel für die Schraube 3, da sie in die Stufenbohrung hineinragen und somit diese verengen. Die Verformungsbereiche 4 reduzieren also den lichten Durchmesser so, dass der Schraubenkopf der Schraube 3 in der Stufenbohrung formschlüssig gehalten ist.

Die Verformungsbereiche 4 sind somit einstückig am Klemmring 1 ausgebildet und es ist kein weiteres separates Teil zur Begrenzung der Schraube 3 notwendig.

Wichtig ist dabei, dass der Klemmring 1 vor Einbringen der Stufenbohrung einen Einschnitt erhält, so dass eine ebene Fläche, deren Normalenrichtung parallel zur Schraubachsrichtung der Schraube 3 ist, am Klemmring 1 hergestellt ist, in welche die Stufenbohrung dann in tangentialer Richtung eingebracht wird. Danach ist dann die Schraube 3 in den Gewindebereich der Stufenbohrung einschraubbar und somit mit dem Klemmring 1 schraubverbunden. Dann werden die Verformungsbereiche 4 erzeugt, indem aus insbesondere drei Richtungen der Rand der Stufenbohrung verformt wird.

Zum Lösen der Klemmverbindung wird später die Schraube 3 aus dem Gewindebereich herausgeschraubt. Dabei wird die Bewegungsfreiheit der Schraube 3 durch das mittels der Verformungsbereiche 4 ausgeführte Begrenzungsmittel 4 eingeschränkt. Der Schraubenkopf der Schraube 3 wird also beim Herausschrauben am Begrenzungsmittel 4 abgestützt und somit die Schlitzweite erhöht, wodurch der Klemmring 1 aufgeweitet wird und leicht von der Adapterwelle 2 abziehbar ist und/oder die Adapterwelle 2 von der Welle leicht lösbar ist.

Das Begrenzungsmittel 4 ist mit dem Klemmring 1 einstückig, also einteilig, ausgeführt. Da ein mittlerer Bereich der Stufenbohrung durch die Verformungsbereiche nicht eingeengt ist, ist die schraube 3 mit einem Werkzeug noch betätigbar. Hierzu weist die Schraube 3 an ihrem Schraubenkopf einen Innensechskantbereich auf und das Werkzeug ist als Sechskant-Werkzeug ausgeführt.

Das in die Stufenbohrung hineinragende Begrenzungsmittel 4 begrenzt den Bewegungsraum des Schraubenkopfes der Schraube 3.

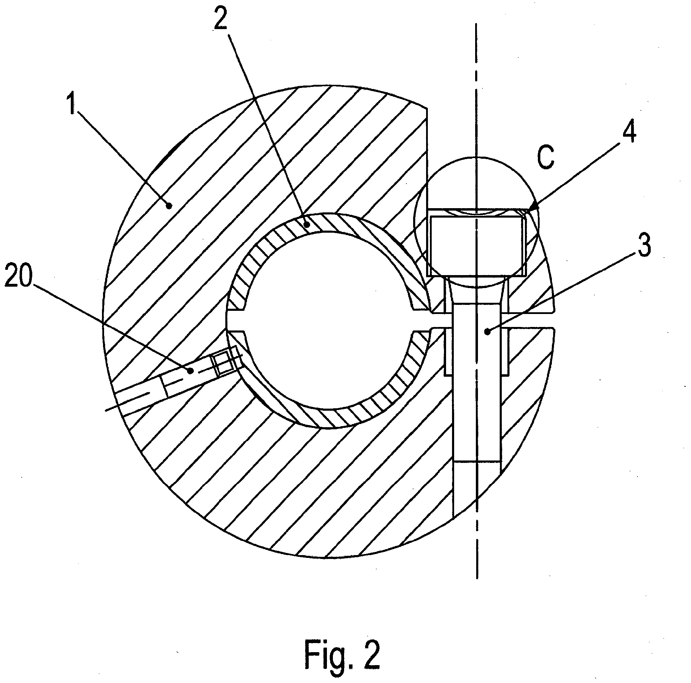

Wie in Figur 2 gezeigt, weist der Klemmring 1 eine radial durchgehende Gewindebohrung auf, in welche ein Gewindestift 20 eingeschraubt ist und nach radial innen aus dem Klemmring 1 hervorragt in eine an einer Umfangsstelle der Adapterwelle 2 angeordnete radiale Vertiefung. Die radiale Vertiefung ist vorzugsweise nicht durchgehend ausgeführt.

Somit ist die relative Position in Umfangsrichtung zwischen Klemmring 1 und Adapterwelle 2 festgelegt. Der Gewindestift 20 hat in der radialen Vertiefung in radialer Richtung Spiel, ist also in radialer Richtung vom Boden der radialen Vertiefung beabstandet.

Der Gewindestift 20 ist in Umfangsrichtung beabstandet von demjenigen Umfangswinkelbereich, welcher von der Stufenbohrung überdeckt ist.

Erfindungsgemäß wird bei Montage die Schraube in den Gewindebereich der Stufenbohrung eingeschraubt und danach das Begrenzungsmittel 4 mittels Verformung hergestellt. Unter Begrenzungsmittel 4 werden alle Verformungsbereiche 4 gemeinsam verstanden, auch wenn die Verformungsbereiche 4 voneinander beabstandet sind.

Danach wird die Schraube 3 aus dem Gewindebereich herausgedreht, so dass der Schraubenkopf der Schraube sich am Begrenzungsmittel 4 abstützt und die Schlitzweite größer ist als bei entspanntem Klemmring 1.

Sodann wird der Klemmring 1 auf die Adapterwelle 2 in seinem somit vorgespannten Zustand, also aufgeweiteten Zustand, axial aufgeschoben, wobei die Welle zuvor schon in den hohlen Bereich der Adapterwelle 1, insbesondere also Hohlwellenbereich, eingeschoben ist, insbesondere aus axialer Richtung kommend.

Mittels des Gewindestiftes 20 wird die relative Position in Umfangsrichtung zwischen Adapterwelle 2 und Klemmring 1 festgelegt.

Danach wird die Schraube in den Gewindebereich geschraubt, wobei zunächst der Klemmring 1 entspannt ist und somit schon eine gewisse Schrumpfkraft erzeugt. Sobald mittels des Schraubenkopfes der Schraube 3 auf die Stufe der für die Schraube 3 und das Begrenzungsmittel 4 vorgesehenen Stufenbohrung gedrückt wird, wird beim weiteren Einschrauben der Schraube 3 in die Gewindebohrung die Schrumpfkraft erhöht und somit die Adapterwelle 2 mit der Welle kraftschlüssig, aber mit hoher Andrückkraft angedrückt.

Vorteiligerweise ist der lichte Durchmesser der zentralen Bohrung des Klemmrings 1, also der Ringöffnung des Klemmrings 1, im entspannten Zustand des Klemmrings 1 kleiner als der Außendurchmesser desjenigen Hohlwellenbereichs der Adapterwelle 2, insbesondere im entspannten Zustand des Hohlwellenbereichs, dessen axial überdeckter Bereich vom Klemmring 1 axial überdeckt wird.

Die Erfindung betrifft also ein Verfahren zum Klemmverbinden eines Hohlwellenbereichs, insbesondere der Adapterwelle 2, mit einer Welle, wobei ein Klemmring 1 auf den Hohlwellenbereich aufgesteckt wird, dessen Schlitzweite mit einer Schraube 3 einstellbar ist. Dabei ist die Schraube 3 in einer Stufenbohrung angeordnet, deren Rand als Begrenzungsmittel fungierende Verformungsbereiche aufweist. Vor dem Aufstecken des Klemmrings 1 auf den Hohlwellenbereich wird der Klemmring 1 mittels der sich am Begrenzungsmittel 4 abstützenden Schraube 3 aufgeweitet.

### Bezugszeichenliste

1 Klemmring, geschlitzt
2 Adapterwelle
3 Schraube
4 Verformungsbereich
20 Gewindestift

## Patentansprüche

1. Anordnung mit einem Klemmring (1) und einer Schraube (3) zum Klemmverbinden eines Hohlwellenbereichs, insbesondere eines Hohlwellenbereichs einer Adapterwelle (2), mit einer Welle,
wobei die Welle in den Hohlwellenbereich eingeführt ist, auf welchen der Klemmring (1) aufgesteckt ist,
wobei der Klemmring (1) einen radial und axial durchgehenden Schlitz aufweist,
wobei eine tangential gerichtete Stufenbohrung im Klemmring (1) angeordnet ist, welche die Schraube (3) aufnimmt,
wobei die Schraube (3) in einen Gewindebereich der Stufenbohrung eingeschraubt ist,
welche auf der von der Stufe der Stufenbohrung abgewandten Seite des Schlitzes angeordnet ist,
wobei **der von der Schraube (3) überdeckte Raumbereich,** insbesondere der Schraubenkopf begrenzt ist durch ein mit dem Klemmring (1) verbundenes Begrenzungsmittel (4), welches auf der von der Stufe abgewandten Seite des Schraubenkopfes angeordnet ist,
**dadurch gekennzeichnet, dass**
**das Begrenzungsmittel** (4) **in die Stufenbohrung teilweise hineinragt,**
**wobei das Begrenzungsmittel in Achsrichtung der Schraube (3) einstückig mit dem Klemmring (1) verbunden ist, wobei das Begrenzungsmittel als Verformungsbereiche (4) des Klemmrings (1) ausgeführt** sind,
**wobei das Begrenzungsmittel** (4) **auf der von der Stufe abgewandten Seite des Schraubenkopfes angeordnet ist.**

2. Anordnung nach Anspruch 1,
**dadurch gekennzeichnet, dass**
der Hohlwellenbereich eine Vertiefung, insbesondere eine radial gerichtete Vertiefung, aufweist, in welchen ein Gewindestift (20) zumindest teilweise hineinragt,
welcher in eine radial gerichtete Gewindebohrung des Klemmrings (1) eingeschraubt ist.

3. Anordnung nach mindestens einem der vorangegangenen Ansprüche,
**dadurch gekennzeichnet, dass**
der Hohlwellenbereich zumindest einen radial durchgehenden, sich axial, also parallel zur Drehachse der Welle und des Hohlwellenbereichs, erstreckenden Schlitz aufweist.

4. Anordnung nach mindestens einem der vorangegangenen Ansprüche,
**dadurch gekennzeichnet, dass**
der in Schraubachsrichtung vom Begrenzungsmittel überdeckte Bereich an den vom Schraubenkopf in Schraubachsrichtung überdeckten Bereich angrenzt, insbesondere nicht überlappt.

5. Anordnung nach mindestens einem der vorangegangenen Ansprüche,
**dadurch gekennzeichnet, dass**
das Begrenzungsmittel einen zur Schraubenachse mittig angeordneten Freiraum aufweist, so dass ein Werkzeug zum Betätigen der Schraube (3) durch den Freiraum hindurchführbar ist.

6. Anordnung nach Anspruch 7,
**dadurch gekennzeichnet, dass**
der Innendurchmesser, insbesondere der lichte Durchmesse, des Klemmrings (1) im entspannten Zustand des Klemmrings (1) betragsmäßig kleiner ist als der Außendurchmesser des Hohlwellenbereichs.

7. Anordnung nach mindestens einem der vorangegangenen Ansprüche,
**dadurch gekennzeichnet, dass**
der Klemmring (1) eine Ausnehmung, insbesondere Einstich, derart aufweist, dass am Klemmring (1) eine Ebene ausgebildet ist, deren Normalenrichtung parallel zur Bohrungsachse der Stufenbohrung und/oder parallel zur Schraubachsrichtung der Schraube (3) ausgerichtet ist,
wobei die Stufenbohrung in diese Ebene eingebracht ist und der von den Verformungsbereichen **(4)** in Schraubachsrichtung überdeckte Bereich den von der Ebene in Schraubachsrichtung überdeckten Punkt oder Bereich umfasst.

8. **Verfahren zum Herstellen einer Anordnung nach mindestens einem der vorangegangenen Ansprüche,**
wobei das Begrenzungsmittel (4) einen zur Schraubenachse mittig angeordneten Freiraum aufweist so dass ein Werkzeug zum Betätigen der Schraube durch den Freiraum hindurchführbar ist.
wobei die Schlitzweite des radial und axial durchgehenden Schlitzes mittels der Schraube (3) einstellbar ist,
wobei **der von der Schraube (3) überdeckte Raumbereich,** der Bewegungsfreiheitsgrad der Schraube (3) in Richtung der Schraubachse und/oder der beim Drehen der Schraube (3) von der Schraube (3) überdeckte Raumbereich, mittels eines mit dem Klemmring (1) verbundenen, einstückig ausgeführten, Begrenzungsmittels begrenzt ist oder wird,
wobei in einem ersten Verfahrensschritt mittels der Schraube (3) der Klemmring (1) derart vorgespannt wird, dass die Schlitzweite einen größeren Wert erreicht als die Schlitzweite im entspannten Zustand des Klemmrings (1) erreicht,
wobei danach in einem zweiten Verfahrensschritt der Klemmring (1) auf den Hohlwellenbereich aufgesteckt wird,
wobei danach in einem dritten Verfahrensschritt, insbesondere mittels Betätigens der Schraube (3), die Schlitzweite verringert wird, bis der Klemmring (1) entspannt ist und/oder bis die vorgesehene kraftschlüssige Verbindung des Hohlwellenbereichs mit der Adapterwelle (2) erreicht wird.

9. Verfahren nach Anspruch 8,
**dadurch gekennzeichnet, dass**
nach dem zweiten und vor dem dritten Verfahrensschritt der Klemmring (1) in Umfangsrichtung relativ zum Hohlwellenbereich ausgerichtet wird, insbesondere indem ein in eine Gewindebohrung des Klemmrings (1) eingeschraubter Gewindestift (20) derart weit geschraubt wird, dass der Gewindestift (20) aus dem Klemmring (1) nach radial innen in eine Vertiefung des Hohlwellenbereichs, insbesondere in eine radial gerichtete Vertiefung am Außenumfang des Hohlwellenbereichs, zumindest teilweise hineinragt,
insbesondere so, dass eine formschlüssige Sicherung des Klemmrings (1) relativ zum Hohlwellenbereich in Umfangsrichtung erreicht ist.

## Claims

1. Arrangement, comprising a clamping ring (1) and a screw (3), for clampingly connecting a hollow-shaft region, in particular a hollow-shaft region of an adapter shaft (2), to a shaft,
the shaft being inserted into the hollow-shaft region on which the clamping ring (1) is placed, the clamping ring (1) having a slot that is radially and axially through-going,
a tangentially directed stepped bore being arranged in the clamping ring (1) and receiving the screw (3),
the screw (3) being screwed into a threaded region of the stepped bore, which is arranged on the slot side remote from the step of the stepped bore,
the spatial region covered by the screw (3), in particular the screw head, being limited by a limiting means (4) that is connected to the clamping ring (1) and is arranged on the screw-head side remote from the step,
**characterised in that**
the limiting means (4) protrudes into the stepped bore in part,
the limiting means being connected to the clamping ring (1) in one piece in the axial direction of the screw (3), the limiting means being configured as deformation regions (4) of the clamping ring (1),
the limiting means (4) being arranged on the screw-head side remote from the step.

2. Arrangement according to claim 1,
**characterised in that**
the hollow-shaft region has a recess, in particular a radially directed recess, into which there protrudes at least in part a threaded rod (20) that is screwed into a radially directed threaded bore in the clamping ring (1).

3. Arrangement according to at least one of the preceding claims,
**characterised in that**
the hollow-shaft region has at least one slot that is radially through-going and extends axially, i.e. in parallel with the axis of rotation of the shaft and of the hollow-shaft region.

4. Arrangement according to at least one of the preceding claims,
**characterised in that**
the region covered by the limiting means in the screw axial direction adjoins, in particular does not overlap, the region covered by the screw head in the screw axial direction.

5. Arrangement according to at least one of the preceding claims,
**characterised in that**
the limiting means has a clearance arranged in the middle in relation to the screw axis so that a tool can be guided through the clearance to actuate the screw (3).

6. Arrangement according to claim 7,
**characterised in that**
when the clamping ring (1) is in the slackened state, the internal diameter, in particular the clear diameter, of the clamping ring (1) is smaller in magnitude than the external diameter of the hollow-shaft region.

7. Arrangement according to at least one of the preceding claims,
**characterised in that**
the clamping ring (1) has a cut-out, in particular a groove, such as to form a plane on the clamping ring (1), the normal direction of said plane being oriented in parallel with the bore axis of the stepped bore and/or in parallel with the screw axial direction of the screw (3),
the stepped bore being made in said plane, and the region covered by the deformation regions (4) in the screw axial direction encompassing the point or region covered by the plane in the screw axial direction.

8. Method for producing an arrangement according to at least one of the preceding claims,
wherein the limiting means (4) has a clearance arranged in the middle in relation to the screw axis so that a tool can be guided through the clearance to actuate the screw,
wherein the slot width of the radially and axially through-going slot can be adjusted by means of the screw (3),
wherein the spatial region covered by the screw (3), the degree of freedom of movement of the screw (3) in the direction of the screw axis and/or the spatial region covered by the screw (3) when the screw (3) is turned is limited by means of a limiting means that is connected to and formed in one piece with the clamping ring (1),
wherein, in a first method step, the clamping ring (1) is preloaded using the screw (3) in such a way that the slot width reaches a higher value than the slot width when the clamping ring (1) is in the slackened state,
wherein, next, in a second method step, the clamping ring (1) is placed on the hollow-shaft region,
wherein, next, in a third method step, the slot width is reduced, in particular by actuating the screw (3), until the clamping ring (1) is slackened and/or until the intended frictional connection between the hollow-shaft region and the adapter shaft (2) is obtained.

9. Method according to claim 8,
**characterised in that**
after the second method step and before the third method step, the clamping ring (1) is oriented in the circumferential direction relative to the hollow-shaft region, in particular by screwing a threaded rod (20), which has been screwed into a threaded bore of the clamping ring (1), to such an extent that the threaded rod (20) protrudes at least in part out of the clamping ring (1) radially inwards into a recess in the hollow-shaft region, in particular into a radially directed recess in the external circumference of the hollow-shaft region,
in particular such as to form-fittingly secure the clamping ring (1) relative to the hollow-shaft region in the circumferential direction.

## Revendications

1. Agencement comprenant une bague de serrage (1) et une vis (3) et conçu pour relier par serrage, à un arbre, une zone d'arbre creux et notamment une zone d'arbre creux d'un arbre adaptateur (2),
ledit arbre étant inséré dans la zone d'arbre creux sur laquelle la bague de serrage (1) est emboîtée,
laquelle bague de serrage (1) est munie d'une fente radialement et axialement ininterrompue,
un alésage étagé dirigé tangentiellement, recevant la vis (3), étant pratiqué dans ladite bague de serrage (1),
ladite vis (3) étant vissée dans une région filetée de l'alésage étagé qui est située du côté de la fente pointant à l'opposé du gradin dudit alésage étagé,
sachant que la zone d'espace couverte par la vis (3), en particulier la tête de ladite vis, est délimitée par un moyen de délimitation (4) relié à la bague de serrage (1) et situé du côté de ladite tête de la vis qui pointe à l'opposé dudit gradin,
**caractérisé par le fait que**
le moyen de délimitation (4) pénètre en partie dans l'alésage étagé,
lequel moyen de délimitation est relié d'un seul tenant à la bague de serrage (1) dans la direction de l'axe de la vis (3), ledit moyen de délimitation étant réalisé en tant que zones de déformation (4) de ladite bague de serrage (1),
lequel moyen de délimitation (4) est situé du côté de la tête de la vis qui pointe à l'opposé du gradin.

2. Agencement selon la revendication 1,
**caractérisé par le fait que**
la zone d'arbre creux comporte un renfoncement, en particulier un renfoncement qui est dirigé radialement et dans lequel pénètre, au moins en partie, un goujon fileté (20) vissé dans un perçage taraudé de la bague de serrage (1), dirigé radialement.

3. Agencement selon au moins l'une des revendications précédentes,
**caractérisé par le fait que**
la zone d'arbre creux comporte au moins une fente radialement ininterrompue qui s'étend axialement, c'est-à-dire parallèlement à l'axe de rotation de l'arbre et de ladite zone d'arbre creux.

4. Agencement selon au moins l'une des revendications précédentes,
**caractérisé par le fait que**
la région couverte par le moyen de délimitation, dans la direction de l'axe de la vis, est limitrophe de la région couverte par la tête de la vis dans la direction de l'axe de ladite vis, et ne chevauche notamment pas ladite région.

5. Agencement selon au moins l'une des revendications précédentes,
**caractérisé par le fait que**
le moyen de délimitation comporte un espace libre disposé centralement par rapport à l'axe de la vis, de telle sorte qu'un outil, dévolu à l'actionnement de ladite vis (3), puisse être guidé à travers ledit espace libre.

6. Agencement selon la revendication 7,
**caractérisé par le fait que**
le diamètre intérieur, en particulier le diamètre libre de la bague de serrage (1) présente, à l'état soulagé de ladite bague de serrage (1), un plus petit dimensionnement que le diamètre extérieur de la zone d'arbre creux.

7. Agencement selon au moins l'une des revendications précédentes,
**caractérisé par le fait que**
la bague de serrage (1) est pourvue d'un évidement, notamment d'une encoche, de manière qu'il soit donné naissance, sur ladite bague de serrage (1), à un plan dont la direction normale est orientée parallèlement à l'axe de l'alésage étagé et/ou parallèlement à la direction de l'axe de la vis (3),
sachant que ledit alésage étagé est pratiqué dans ce plan et que la région, couverte par les zones de déformation (4) dans la direction de l'axe de ladite vis, englobe le point ou la région couvert(e) par ledit plan dans ladite direction de l'axe de la vis.

8. Procédé de fabrication d'un agencement conforme à au moins l'une des revendications précédentes,
sachant que le moyen de délimitation (4) comporte un espace libre disposé centralement par rapport à l'axe de la vis, de telle sorte qu'un outil, dévolu à l'actionnement de ladite vis, puisse être guidé à travers ledit espace libre,
sachant que la largeur de la fente, radialement et axialement ininterrompue, peut être réglée au moyen de la vis (3),
sachant que la zone d'espace couverte par ladite vis (3), le degré de liberté de mouvement de la vis (3) dans la direction de l'axe de ladite vis, et/ou la zone d'espace couverte par la vis (3) au cours de la rotation de ladite vis (3), est (sont) délimité(e)(s) à l'aide d'un moyen de délimitation réalisé d'un seul tenant et relié à la bague de serrage (1),
sachant que, lors d'une première étape opératoire, la bague de serrage (1) est précontrainte, au moyen de la vis (3), de façon telle que la largeur de la fente atteigne une plus grande valeur que la largeur de ladite fente à l'état soulagé de ladite bague de serrage (1),
sachant qu'à un stade successif, lors d'une deuxième étape opératoire, la bague de serrage (1) est emboîtée sur la zone d'arbre creux,
sachant que la largeur de la fente est diminuée à un stade ultérieur lors d'une troisième étape opératoire, notamment par actionnement de la vis (3), jusqu'à ce que ladite bague de serrage (1) soit soulagée et/ou jusqu'à ce que soit atteinte la liaison prévue, par engagement positif, de ladite zone d'arbre creux avec l'arbre adaptateur (2).

9. Procédé selon la revendication 8,
**caractérisé par le fait**
**qu'**à l'issue de la deuxième, et préalablement à la troisième étape opératoire, la bague de serrage (1) est orientée par rapport à la zone d'arbre creux dans la direction périphérique, notamment en ce sens qu'un goujon fileté (20), vissé dans un perçage taraudé de ladite bague de serrage (1), est vissé d'une profondeur telle que ledit goujon fileté (20) sorte de ladite bague de serrage (1), vers l'intérieur dans le sens radial, et pénètre au moins en partie dans un renfoncement de la zone d'arbre creux, en particulier dans un renfoncement dirigé radialement sur le pourtour extérieur de ladite zone d'arbre creux,
notamment de façon telle qu'un arrêt de la bague de serrage (1), par rapport à la zone d'arbre creux, soit atteint par complémentarité de formes dans ladite direction périphérique.
